(19) Europäisches Patentamt
European Patent Office
Office européen des brevets

(11) **EP 2 225 093 B1**

(12) **EUROPÄISCHE PATENTSCHRIFT**

(45) Veröffentlichungstag und Bekanntmachung des Hinweises auf die Patenterteilung:
**04.01.2012 Patentblatt 2012/01**

(21) Anmeldenummer: **08868049.1**

(22) Anmeldetag: **07.11.2008**

(51) Int Cl.:
*B29C 70/44* (2006.01)     *B29C 43/36* (2006.01)
*B29C 70/46* (2006.01)     *B29C 70/54* (2006.01)
*B29D 99/00* (2010.01)

(86) Internationale Anmeldenummer:
**PCT/EP2008/065114**

(87) Internationale Veröffentlichungsnummer:
**WO 2009/083318 (09.07.2009 Gazette 2009/28)**

(54) **VERFAHREN ZUR HERSTELLUNG EINES PROFILS AUS FASERVERBUNDWERKSTOFF**

METHOD FOR PRODUCING A PROFILE FROM COMPOSITE FIBER MATERIAL

PROCÉDÉ DE FABRICATION D'UN PROFILÉ EN MATIÈRE COMPOSITE FIBREUSE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **28.12.2007 DE 102007062872**

(43) Veröffentlichungstag der Anmeldung:
**08.09.2010 Patentblatt 2010/36**

(73) Patentinhaber: **Airbus Operations GmbH**
**21129 Hamburg (DE)**

(72) Erfinder:
• **LENGSFELD, Hauke**
**21717 Helmste (DE)**
• **CRUYS, Wolfgang**
**21682 Stade (DE)**

• **BRANDENBURG, Roland**
**21255 Tostedt (DE)**
• **SCHRÖDER, René**
**21614 Buxtehude (DE)**
• **MARQUARDT, Hans**
**21717 Fredenbeck (DE)**

(74) Vertreter: **Peckmann, Ralf**
**Reinhard, Skuhra, Weise & Partner GbR**
**Patent- und Rechtsanwälte**
**Friedrichstrasse 31**
**80801 München (DE)**

(56) Entgegenhaltungen:
**EP-A- 0 368 734          US-A1- 2001 040 317**
**US-A1- 2007 151 657     US-A1- 2007 175 171**
**US-B1- 6 523 246**

**Beschreibung**

Die vorliegende Erfindung betrifft ein Verfahren zur Herstellung eines Profils aus Faserverbundwerkstoff.

Obwohl für die Herstellung beliebiger Profile geeignet, werden die vorliegende Erfindung sowie die ihr zugrunde liegende Problematik in Bezug auf Stringer eines Flugzeugs näher erläutert.

Gemäß einem der Anmelderin bekannten Verfahren zur Herstellung von Profilen, beispielsweise Stringern, wird zunächst ein Vorgelege aus Faserverbundwerkstoff auf einer Laminiervorrichtung abgelegt. Anschließend werden an das Vorgelege Stützelemente angelegt, welche das Vorgelege abstützen und somit in der gewünschten Form des herzustellenden Stringers halten. Daraufhin wird das Vorgelege samt den Stützelementen in einen Vakuumsack eingepackt und dieser mit Vakuum beaufschlagt. Abschließend wird die Anordnung umfassend den Vakuumsack mit dem darin angeordneten Vorgelege und den Stützelementen in einem Autoklaven unter Druck und Wärme ausgehärtet.

Faserverbundwerkstoffe, insbesondere mit Kohlenstoff-Fasern, weisen einen sehr niedrigen Wärmeausdehnungskoeffizienten auf. Folglich müssen die das Vorgelege abstützenden Stützelemente - welche mit dem Vorgelege direkt in Kontakt stehen - ebenfalls aus einem Material ausgebildet werden, welches einen sehr niedrigen Wärmeausdehnungskoeffizienten aufweist, da es ansonsten aufgrund der Wechselwirkung des Vorgeleges mit den Stützelementen zu einem ungewünschten Verzug des Vorgeleges kommt. Materialien mit einem sehr niedrigen Wärmeausdehnungskoeffizienten, beispielsweise Nickel-36 Stahl, sind sehr teuer. Weiterhin müssen die Stützelemente eine ganz bestimmte Form abhängig von der Form des herzustellenden Profils aufweisen. Dies wiederum erfordert bei Stützelementen aus Nickel-36 Stahl eine sehr aufwendige mechanische Bearbeitung, da dieser sehr hart ist. Besonders bei der Herstellung gestrakter Profile - das sind solche Profile, welche sich in ihrer Längsrichtung krümmen - ist der Aufwand für die mechanische Bearbeitung der Stützelemente groß.

Die EP 0 368 734 offenbart ein Verfahren zur Herstellung einer selbstverstärkten Platte aus Faserverbundwerkstoff, insb. im Luft- und Raumfahrtbereich, mit folgenden Schritten:

- Einpacken eines mit einem T-förmigen Querschnitt ausgebildeten Vorgeleges, welches einen Steg und Fußabschnitte aufweist, in einen vakuumsack;

- Anlegen von einem U-förmigen Querschnitt ausgebildeten Stützelementen an das eingepackte Vorgelege zum Abstützen desselben derart, dass die Stützelemente gegen den Vakuumsack in Längsrichtung gleitend verschiebbar anliegen, wobei Abschnitte der Stützelemente den Steg des Vorgeleges abstützen und Abschnitte der Stützelemente auf den Fußabschnitten des Vorgeleges aufliegen;

- Beaufschlagen des Vakuumsacks mit einem Vakuum;

- Anbringen einer steifen Verbindungsstruktur auf das U-förmige Stützelement um die Stützelemente relativ zueinander zu fixieren;

- Aushärten des Vorgeleges zum Bilden eines Profils.

Es ist daher Aufgabe der vorliegenden Erfindung, ein verbessertes Verfahren zur Herstellung eines Profils aus Faserverbundwerkstoff bereitzustellen, welches insbesondere ohne die vorstehend beschriebenen, sehr teuren Stützelemente auskommt.

Diese Aufgabe wird durch ein Verfahren mit den Merkmalen des Patentanspruchs 1 gelöst.

Demgemäß wird ein Verfahren zur Herstellung eines Profils aus Faserverbundwerkstoff, insb. im Luft- und Raumfahrtbereich, mit folgenden Schritten bereitgestellt: Zunächst wird ein Vorgelege in einen Vakuumsack eingepackt. Anschließend wird wenigstens ein Stützelement an das eingepackte Vorgelege zum Abstützen desselben angelegt. Daraufhin wird der Vakuumsack mit einem Vakuum beaufschlagt. Weiterhin anschließend wird das Vorgelege zum Bilden des Profils ausgehärtet.

Die der Erfindung zugrunde liegende Idee besteht in der Erkenntnis, dass der Vakuumsack eine Bewegung des wenigstens einen Stützelements relativ zu dem Vorgelege erlaubt, wenn das wenigstens eine Stützelement und das Vorgelege an gegenüberliegenden Seiten des Vakuumsacks angeordnet sind. Eine mechanische Wechselwirkung zwischen dem Vorgelege und dem wenigstens einen Stützelement, die zu einem Verzug des Vorgeleges führen könnte, wird somit vermieden. In der Folge können als Material für die Stützelemente kostengünstige Materialien, wie beispielsweise Aluminium- und Stahlbleche verwendet werden, welche sich auch einfach mechanisch in die gewünschte Form bringen lassen. Alternativ sind auch Stützelemente aus Kunststoff, insb. Strangpressprofile aus Kunststoff, denkbar. Damit ergibt sich ein gegenüber dem bekannten Verfahren sehr viel kostengünstigeres Verfahren zur Herstellung eines Profils aus Faserverbundwerkstoff. Besonders gestrakte Profile lassen sich somit günstig herstellen.

Aus den Unteransprüchen ergeben sich vorteilhafte Weiterbildungen und Ausgestaltungen der Erfindung.

Unter einem "Vorgelege" ist vorliegend jede Art von Fasermaterial, insbesondere Fasergelege, Fasergewebe oder Faserfilze zu verstehen. Die Fasern können beispielsweise als Kohlenstoff-Fasern, Glasfasern oder Aramidfasern ausgebildet sein. Vorzugsweise ist das Fasermaterial bereits mit einer Harzmatrix vorimprägniert. Genauso kann aber auch vorgesehen sein, dass das Fasermaterial erst nach dem Einpacken des Vorgeleges und nach dem Anlegen des wenigstens eines Stützelementes mit der Harzmatrix infiltriert wird, beispielsweise mittels eines Infusionsverfahrens, und danach zu dem Profil ausgehärtet wird. Die Harzmatrix ist vorzugsweise ein Epoxydharz.

Gemäß einer bevorzugten Weiterbildung des erfindungsgemäßen Verfahrens wird das wenigstens eine Stützelement aus Aluminium oder Stahl, insbesondere aus einem Aluminiumblech oder Stahlblech, ausgebildet. Selbstverständlich sollen unter Aluminium auch sämtliche Aluminiumlegierungen subsumiert sein. Aluminium beziehungsweise Stahl ist vergleichsweise kostengünstig und lässt sich auch einfach mechanisch zu den Stützelementen mit die gewünschten Form umarbeiten, wodurch weitere Kosten eingespart werden können. Besonders Stützelemente aus Blech lassen sich einfach für die Herstellung gestrakter Profile biegen.

Gemäß einer weiter bevorzugten Weiterbildung des erfindungsgemäßen Verfahrens wird das Vorgelege mit einem Steg ausgebildet und es werden zwei insbesondere als L-Profile ausgebildete Stützelemente zum Abstützen des Stegs zwischen sich an das eingepackte Vorgelege angelegt. Die Längsachse der L-Profile erstreckt sich dabei im Wesentlichen parallel zur Längsachse des Vorgeleges. Der Steg des Vorgeleges ist vergleichsweise formlabil und es bedarf daher der Abstützung an gegenüberliegenden Seiten.

Unter der "Längsachse" eines Bauteils ist vorliegend die Achse zu verstehen, entlang welcher der Querschnitt des Bauteils nur unwesentlich variiert.

Gemäß des erfindungsgemäßen Verfahrens werden die zwei Stützelemente mittels eines Dachgummiprofils relativ zueinander gehalten. In einer von der vorliegenden Erfindung nicht umfassten Weiterbildung des Verfahrens werden anstatt des Dachgummiprofils zwei Dreiecksprofile und ein diese verbindendes Klebeband, eine Spannklammer und/oder ein weiterer Vakuumsack verwendet. Unter einem "Dachgummiprofil" ist vorliegend ein elastisches Profil mit einer Abstützfläche und einer Ausnehmung in dieser, welche sich in Längsrichtung des Dachgummiprofils erstreckt, zu verstehen. Die Ausnehmung, insb. Nut, ist dabei zur elastischen Aufnahme des Stegs des Profils samt den diesen abstützenden Abschnitten der Stützelemente ausgebildet. Das Dachgummiprofil ist besonders für die Herstellung von T-Profilen geeignet. Eine lediglich relative Fixierung der Stützelemente zueinander vermeidet Spannungen, welche in Elementen mit einem hohen Wärmeausdehnungskoeffizienten auftreten, wenn dies jeweils an zwei zueinander ortsfesten Punkten fixiert sind.

Überhaupt sind Dachgummiprofile im Vergleich zu den derzeit verwendeten schweren Werkzeugen aus Nickel-36 Stahl sehr einfach zu handhaben.

Gemäß einer von der vorliegenden Erfindung nicht umfassten Weiterbildung wird das eingepackte Vorgelege samt des wenigstens einen Stützelements in den weiteren Vakuumsack eingepackt, wobei das Vakuum, welches an den weiteren Vakuumsack angelegt wird, kleiner oder gleich dem an dem Vakuumsack anliegenden Vakuum eingestellt wird. Mit "Vakuum" ist vorliegend der Betrag der Differenz zwischen dem atmosphärischen Druck und dem anliegenden, absoluten Druck gemeint. Mit der vorstehenden Weiterbildung wird erreicht, dass der Vakuumsack fest an dem Vorgelege anliegt und sich nicht aufgrund des in ihm vorherrschenden Drucks in Richtung des zweiten Vakuumsack verformt, was die Materialeigenschaften des ausgehärteten Faserverbundwerkstoffs nachteilig beeinflussen würde.

Die Erfindung wird im Folgenden anhand von Ausführungsbeispielen unter Bezugnahme auf die beiliegenden Figuren näher erläutert.

Von den Figuren zeigen:

Fig. 1 einen Verfahrenszustand eines Verfahrens gemäß einem Ausführungsbeispiel der vorliegenden Erfindung;

Fig. 2 einen Verfahrenszustand eines von der vorliegenden Erfindung nicht umfassten Verfahrens;

Fig. 3 einen Verfahrenszustand eines von der vorliegenden Erfindung nicht umfassten Verfahrens; und

Fig. 4 einen Verfahrenszustand eines von der vorliegenden Erfindung nicht umfassten Verfahrens.

In den Figuren bezeichnen gleiche Bezugszeichen gleiche oder funktionsgleiche Komponenten, soweit nichts Gegenteiliges angegeben ist.

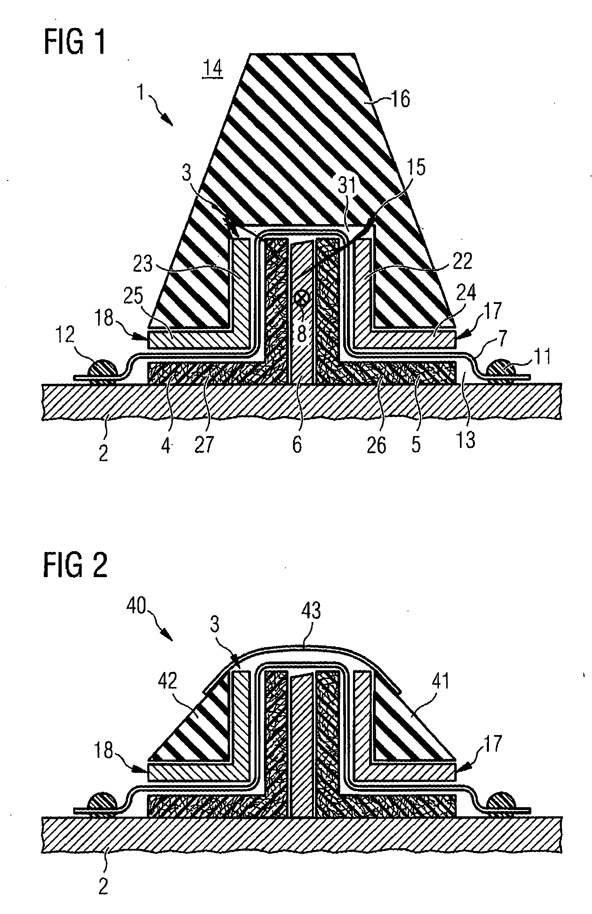

Fig. 1 zeigt in einem Querschnitt eine Anordnung 1 zur Herstellung eines als T-Stringer ausgebildeten Profils.

Die Anordnung 1 weist eine Laminiervorrichtung 2 auf, auf welcher ein Vorgelege 3 mit einem T-förmigen Querschnitt, bestehend aus zwei Teilen 4, 5 mit jeweils einem L-förmigen Querschnitt und einem dazwischen angeordneten Blade 6.

Das Vorgelege 3 besteht gemäß dem vorliegenden Ausführungsbeispiel aus einem Kohlenstoff-Fasergelege, welches mit einer Epoxydharzmatrix vorimprägniert ist, d.h. das Epoxydharzmatrix ist im unausgehärteten Zustand. Das Vorgelege 3 erstreckt sich im Wesentlichen senkrecht zur Papierebene entlang der Längsachse 8. Das Vorgelege 3 kann auch gestrakt ausgebildet sein.

Das Vorgelege 3 ist in einen Vakuumsack 7 eingepackt, welcher mit Dichtmitteln 11, 12 gegenüber der Laminiervorrichtung 2 abgedichtet ist. An dem Innenraum 13 des Vakuumsacks 7 liegt ein Vakuum P1, also ein Unterdruck gegenüber dem in der Atmosphäre 14 vorherrschenden Druck P0, an.

Ein Steg 15 des Vorgeleges 3 wird in der in Fig. 1 dargestellten Position mittels eines Gummidachprofil 16 und zwei Stützelementen 17, 18 gehalten.

Die Stützelemente 17, 18 sind jeweils aus einem Aluminiumblech mit einem L-förmigen Querschnitt ausgebildet. Die Stützelemente 17, 18 liegen gegen den Vakuumsack 7 in der Längsrichtung 8 gleitend verschiebbar an, wobei Abschnitte 22, 23 der Stützelemente 17 bzw. 18 den Stringersteg 15 abstützen und Abschnitte 24, 25 der Stützelemente 17 bzw. 18 auf den zwei Fußabschnitten 26 bzw. 27 des Vorleges 3 aufliegen.

Das Dachgummiprofil 16 weist eine sich in der Längsrichtung 8 erstreckende Ausnehmung 31 auf, in welcher der Steg 15 mit den Abschnitten 22, 23 zwischen Seitenflächen 32, 33 der Ausnehmung 31 aufgenommen ist. An sich im Wesentlichen senkrecht zu den Seitenflächen 32, 33 der Ausnehmung 31 erstreckenden Auflageflächen 34, 35 liegt das Dachgummiprofil auf den Abschnitten 24 bzw. 25 der Stützelemente 17 bzw. 18 auf.

Das Dachgummiprofil 16 wird über den Steg 15 samt den Abschnitten 22, 23 der Stützelemente 17, 18 gestülpt, wobei das Dachgummiprofil 16 elastisch aufgeweitet wird, und fixiert diese Stützelemente 17, 18 somit relativ zueinander, wodurch der Stringersteg 15 in seiner Form wie in Fig. 1 dargestellt gehalten wird. Die Seitenflächen 32, 33 erzeugen dabei einen geringfügigen elastischen Druck gegen die Abschnitte 22 bzw. 23 der Stützelemente 17 bzw. 18.

Anschließend wird die Anordnung 1 mit Wärme (und unter Umständen Druck), vorzugsweise in einem Autoklaven, beaufschlagt. Dadurch härtet das vorlege 3 zu einem T-Stringer aus.

Die Anordnung 40 aus Fig. 2 unterscheidet sich von der aus Fig. 1 lediglich dadurch, dass das Dachgummiprofil 16 durch zwei Dreiecksprofile 41, 42 und ein diese verbindendes Klebeband 43 ersetzt ist. Die Dreiecksprofile 41, 42 sind vorzugsweise auch aus einem Gummimaterial ausgebildet und greifen in die Stützelemente 17, 18 zum Halten derselben in Position in Verbindung mit dem Klebeband 43 ein.

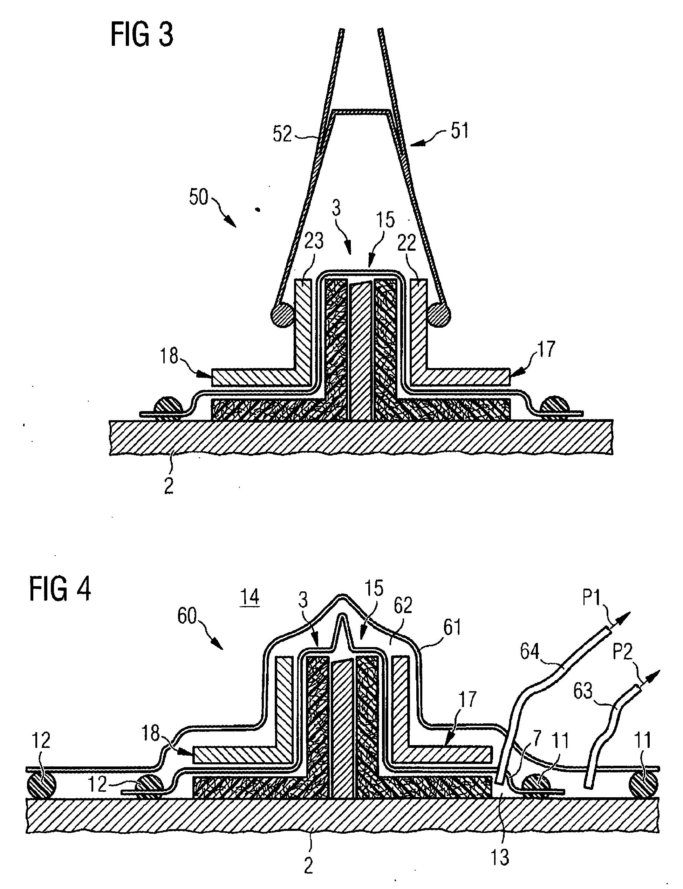

Bei der Anordnung 50 aus Fig. 3 ist anstelle des Dachgummiprofils 16 gemäß dem Ausführungsbeispiel aus Fig. 1 eine Spannklammer 51 vorgesehen, welche die Abschnitte 22, 23 der Stützelemente 17 bzw. 18 gegen den Steg 15 des Vorgeleges 3 mit einer geringen Kraft presst, wofür der Bügel 52 der Spannklammer 51 vorzugsweise aus einem federelastischen Material ausgebildet ist.

Bei der Anordnung 60 aus Fig. 4 ist anstelle des Dachgummiprofils 16 gemäß dem Ausführungsbeispiel aus Fig. 1 ein weiterer Vakuumsack 61 vorgesehen, welcher in seinem Innenraum 62 das Vorgelege 3 samt dem Vakuumsack 7 und den Stützelementen 17, 18 aufnimmt. An dem Innenraum 62 des weiteren Vakuumsacks 61 liegt ein Vakuum P2 an. Das Anlegen des Vakuums P1 an dem Innenraum 13 des Vakuumsacks 7 und des Vakuum P2 an den Innenraum 62 des Vakuumsacks 61 kann beispielsweise mittels Schläuchen 63, 64 erfolgen, die jeweils mit einer nicht dargestellten Vakuumpumpe verbunden sind.

Für die Vakua P1 und P2 soll folgende Relation gelten:

$$P1 \geq P2$$

Beispielsweise P1 = 100 kPa und P2 = 25 kPa, wobei P1 und P2 relativ zu dem atmosphärischen Druck P0 gemessen sind.

Bei dem Ausführungsbeispiel gemäß Fig. 4 presst bei anliegender Vakua P1 und P2 der Vakuumsack 61 die Stützelemente 17, 18 gegen den Steg 15 für eine Abstützung desselben.

Anstelle des vorimprägnierten Vorgeleges 3 kann auch jederzeit trockenes Fasermaterial verwendet werden , welches nach dem Anlegen der Stützelemente 17, 18 und vor dem Aufbringen von Wärme und/oder Druck auf die jeweiligen Anordnungen 1, 40, 50 beziehungsweise 60 mit einer Harzmatrix infiltriert wird.

Die vorliegende Erfindung schafft ein Verfahren zur Herstellung eines Profils aus Faserverbundwerkstoff, insbesondere im Luft- und Raumfahrtbereich, mit folgenden Schritten: Zunächst wird ein Vorgelege, insbesondere aus vorimprägniertem Fasermaterial, in einen Vakuumsack eingepackt. Anschließend werden Stützelemente an das eingepackte Vorgelege zum Abstützen desselben angelegt. Danach wird der Vakuumsack mit einem Vakuum beaufschlagt. Weiterhin anschließend wird das Vorgelege zu dem Profil unter Einwirkung von Wärme, insbesondere im Autoklaven, ausgehärtet. Vorteilhaft lassen sich bei dem erfindungsgemäßen Verfahren die Stützelemente aus einem günstigen Material, insbesondere Aluminium, anstelle von sehr teurem Nickel-36 Stahl ausbilden, da die Stützelemente mittels des Vakuumsacks von dem vorgelege in Längsrichtung mechanisch entkoppelt sind, so dass eine Bewegung der Stützelemente in der Längsrichtung relativ zu dem Vorgelege ermöglicht ist.

**Bezugszeichenliste**

1 Anordnung

2 Laminiervorrichtung

3 Vorgelege

4 Teil

5 Teil

6 Blades

7 Vakuumsack

8 Längsrichtung

11 Dichtmittel

| | |
|---|---|
| 12 | Dichtmittel |
| 13 | Innenraum |
| 14 | Atmosphäre |
| 15 | Steg |
| 16 | Dachgummiprofil |
| 17 | Stützelement |
| 18 | Stützelement |
| 22 | Abschnitt |
| 23 | Abschnitt |
| 24 | Abschnitt |
| 25 | Abschnitt |
| 26 | Fußabschnitt |
| 27 | Fußabschnitt |
| 31 | Ausnehmung |
| 32 | Seitenfläche |
| 33 | Seitenfläche |
| 34 | Auflagefläche |
| 35 | Auflagefläche |
| 40 | Anordnung |
| 41 | Dreiecksprofil |
| 42 | Dreiecksprofil |
| 43 | Klebeband |
| 50 | Anordnung |
| 51 | Spannklammer |
| 52 | Bügel |
| 60 | Anordnung |
| 61 | weiterer Vakuumsack |
| 62 | Innenraum |
| 63 | Schlauch |

| | |
|---|---|
| 64 | Schlauch |
| P0 | atmosphärischer Druck |
| P1 | Druck in dem Vakuumsack 7 |
| P2 | Druck im weiteren Vakuumsack 61 |

**Patentansprüche**

1. Verfahren zur Herstellung eines Profils aus Faserverbundwerkstoff, insb. im Luft- und Raumfahrtbereich, mit folgenden Schritten:

   Einpacken eines mit einem T-förmigen Querschnitt ausgebildeten Vorgeleges (3), welches einen Steg (15) und Fußabschnitte (26, 27) aufweist, in einen Vakuumsack (7);
   Anlegen von zwei mit einem L-förmigen Querschnitt ausgebildeten Stützelementen (17, 18) an das eingepackte Vorgelege (3) zum Abstützen desselben derart, dass die Stützelemente (17, 18) gegen den Vakuumsack (7) in Längsrichtung (8) gleitend verschiebbar anliegen, wobei Abschnitte (22, 23) der Stützelemente (17, 18) den Steg (15) des Vorgeleges (3) abstützen und Abschnitte (24, 25) der Stützelemente (17, 18) auf den Fußabschnitten (26, 27) des Vorgeleges (3) aufliegen;
   Beaufschlagen des Vakuumsacks (7) mit einem Vakuum (P1);
   Aufstülpen eines Dachgummiprofils (16) mit einer sich in der Längsrichtung (8) erstreckenden Ausnehmung (31) derart auf die Stützelemente (17, 18), dass der Steg (15) des Vorgeleges (3) mitsamt den den Steg (15) abstützenden Abschnitten (22, 23) der Stützelemente (17, 18) zwischen Seitenflächen der Ausnehmung (31) aufgenommen wird und sich senkrecht zu den Seitenflächen erstreckende Auflageflächen des Dachgummiprofils (16) auf den auf den Fußabschnitten (26, 27) aufliegenden Abschnitten (24, 25) der Stützelemente (17, 18) aufliegen, wobei das Dachgummiprofil (16) elastisch aufgeweitet wird und die Stützelemente relativ zueinander fixiert werden; und
   Aushärten des Vorgeleges (3) zum Bilden des Profils.

2. Verfahren nach Anspruch 1,
   **dadurch gekennzeichnet,**
   **dass** die zwei Stützelemente (17, 18) aus Aluminium oder Stahl, insbesondere aus einem Aluminiumblech oder Stahlblech, ausgebildet werden.

## Claims

1. A method of producing a profile from composite fiber material, in particular in the aerospace sector, having the following steps:

   - wrapping a preliminary non-woven (3) of T-shaped cross-section, which comprises a web (15) and foot portions (26, 27), in a vacuum bag (7);
   - placing two support elements (17, 18) of L-shaped cross section onto the wrapped preliminary non-woven (3) to support the latter, such that the support elements (17, 18) lie against the vacuum bag (7) so as to be slidably displaceable in the longitudinal direction (8), portions (22, 23) of the support elements (17, 18) supporting the web (15) of the preliminary non-woven (3) and portions (24, 25) of the support elements (17, 18) resting on the foot portions (26, 27) of the preliminary non-woven (3);
   - applying a vacuum (P1) to the vacuum bag (7);
   - placing a rubber roof profile (16) with a recess (31) extending in the longitudinal direction (8) onto the support elements (17, 18) in such a way that the web (15) of the preliminary non-woven (3), together with the portions (22, 23) of the support elements (17, 18) supporting the web (15), is accommodated between side faces of the recess (31), and bearing surfaces of the rubber roof profile (16) which extend perpendicularly to the side faces rest on the portions (24, 25), resting on the foot portions (26, 27), of the support elements (17, 18), the rubber roof profile (16) being resiliently widened and the support elements being fixed relative to one another; and
   - curing the preliminary non-woven (3) to form the profile.

2. A method according to claim 1, **characterised in that** the two support elements (17, 18) are formed from aluminium or steel, in particular from an aluminium sheet or steel sheet.

## Revendications

1. Procédé de fabrication d'un profilé en matière composite fibreuse, en particulier dans le domaine de l'aéronautique et de l'astronautique, comprenant les étapes suivantes :

   - envelopper un renvoi (3), conçu avec une section en forme de T et qui présente une nervure (15) et des sections de pied (26, 27), dans une poche à vide (7) ;
   - poser deux éléments d'appui (17, 18), conçus avec une section en forme de L, sur le renvoi (3) enveloppé pour supporter ce dernier de telle manière que les éléments d'appui (17, 18) s'appliquent contre la poche à vide (7) dans le sens longitudinal (8) de façon à pouvoir coulisser en glissement, des sections (22, 23) des éléments d'appui (17, 18) soutenant la nervure (15) du renvoi (3) et des sections (24, 25) des éléments d'appui (17, 18) reposant sur les sections de pied (26, 27) du renvoi (3) ;
   - soumettre la poche à vide (7) à l'influence d'un vide (P1) ;
   - enfoncer un profilé en caoutchouc à rainure (16), doté d'un évidement (31) s'étendant dans le sens longitudinal (8), sur les éléments d'appui (17, 18) de telle façon que la nervure (15) du renvoi (3) est logée, conjointement avec les sections (22, 23) des éléments d'appui (17, 18) soutenant la nervure (15), entre les faces latérales de l'évidement (31) et que les surfaces d'appui du profilé en caoutchouc à rainure (16) s'étendant perpendiculairement aux faces latérales reposent sur les sections (24, 25) des éléments d'appui (17, 18) reposant sur les sections de pied (26, 27), le profilé en caoutchouc à rainure (16) étant élargi élastiquement et les éléments d'appui étant fixés l'un par rapport à l'autre ; et
   - durcir le renvoi (3) pour former le profilé.

2. Procédé selon la revendication 1, **caractérisé en ce que** les deux éléments d'appui (17, 18) sont conçus en aluminium ou en acier, en particulier à partir d'une tôle d'aluminium ou d'une tôle d'acier.

FIG 1

FIG 2

**FIG 3**

**FIG 4**

**IN DER BESCHREIBUNG AUFGEFÜHRTE DOKUMENTE**

**In der Beschreibung aufgeführte Patentdokumente**

- EP 0368734 A